# FASCICULE DE BREVET EUROPEEN

(11) **EP 0 728 906 B1**
(45) Date de publication et mention de la délivrance du brevet: **28.07.1999**
(21) Numéro de dépôt: 96440016.2
(22) Date de dépôt: 14.02.1996
(51) Int. Cl.: E06B 9/82, H02K 7/102

(54) **Moteur muni d'un dispositif de freinage par manque de courant**
Elektromotor mit Ruhestrombremsvorrichtung
Electric motor with zero current braking device

(30) Priorité: 21.02.1995 FR 9502221
(43) Date de publication de la demande: 28.08.1996
(73) Titulaire: ALIADE, 68300 Saint-Louis (FR)
(72) Inventeur: Plumer, Louis, F-90000 Belfort (FR); Evreux, Gérard, F-74130 Ayze (FR)
(74) Mandataire: Rhein, Alain

(56) Documents cités:
- EP-A- 0 005 212
- FR-A- 1 563 930
- FR-A- 2 376 286
- US-A- 3 037 133
- US-A- 3 176 173

## Description

La présente invention concerne un moteur frein conforme au préambule de la revendication 1.

La présente invention trouvera son application dans le domaine des moteurs asynchrones utilisés en combinaison avec un frein fonctionnant par manque de courant et, plus particulièrement, les moteurs tubulaires destinés aux volets roulants, stores ou analogues.

On connaît déjà un moteur frein de ce type par le brevet français n° 2.562.348 dans lequel il est décrit un dispositif de freinage dont le plateau mobile et le plateau fixe sont disposés dans le prolongement de l'ensemble rotor-stator globalement au-delà de ce dernier. C'est ainsi que tout-à-fait classiquement les pièces constitutives du dispositif de freinage, à savoir dans l'ordre, le plateau mobile, la garniture de frein portée par celui-ci , la garniture de frein du plateau fixe et ledit plateau fixe lui-même, sont empilées successivement selon un ordre logique.

Il va sans dire qu'un tel empilement axial sur l'arbre du rotor, qui plus est s'étend au-delà du stator, ne saurait avoir sur l'encombrement longitudinal du moteur qu'une conséquence néfaste.

De plus, l'efficacité de freinage se trouve réduite selon le dispositif décrit dans le brevet français précité, car la surface de contact des garnitures est strictement limitée à leur propre plan de joint, sans possibilité d'augmentation.

On connaît, par ailleurs, par le document EP-A-0.005.212, un moteur muni d'un stator et d'un rotor lequel est pourvu, à l'une de ses extrémités, d'un déviateur de flux destiné à agir sur le plateau mobile d'un frein fonctionnant par manque de courant.

Plus particulièrement, en cas de fonctionnement du moteur et sous l'influence du déviateur de flux, ce plateau mobile du frein est attiré en direction du rotor, contre l'action d'un ressort ayant tendance à le repousser en position de freinage. Ce ressort, de forme hélicoïdale, est monté sur l'arbre du rotor et vient se loger dans un évidement annulaire défini entre cet arbre et le moyeu amagnétique du déviateur du flux. Le plateau mobile du frein comporte une mâchoire mobile complétée par des collerettes montées coulissantes sur l'axe du rotor tout en étant solidaires en rotation de ce dernier. Quant au plateau fixe, il se présente sous forme de plaquettes de freinage annulaires interposées entre deux collerettes successives ou encore entre une collerette et la mâchoire mobile. Ces plaquettes de freinage de configuration annulaire sont immobilisées en rotation au moyen d'une virole dépendant du couvercle refermant le carter du moteur à l'une de ses extrémités et servant, en outre, de support de palier de l'arbre du moteur. En fait, la virole suscitée vient se loger sous le chignon que définissent les bobinages à cette extrémité du stator.

De même, il est connu, par le document FR-A-1.563.930, un moteur électrique à frein fonctionnant par manque de courant, ce moteur étant muni d'un stator à l'intérieur duquel est monté en rotation un rotor pourvu, à l'une de ses extrémités, d'un déviateur de flux. Sous ce déviateur de flux et entre l'arbre du rotor, est usiné un évidement annulaire de forme tronconique à l'intérieur duquel s'étend un embout de forme ajustée dont est pourvu le plateau mobile du frein. Ainsi, ce plateau mobile, tout en étant solidaire en rotation de l'arbre du rotor, est apte à se déplacer axialement sur cet arbre, sous l'influence de l'attraction magnétique produite par le déviateur de flux lors de l'alimentation du moteur. Ledit plateau mobile est tiré en direction du rotor contre l'action de moyens de rappel élastiques ayant tendance à le repousser en position de freinage. Précisément, lors de la coupure de l'alimentation en énergie électrique du moteur, ce plateau mobile du frein, muni d'une garniture de freinage, vient en applique contre le plateau fixe se présentant sous forme d'une bague intermédiaire qui, tout en étant fixe en rotation, est montée coulissante, axialement, à l'intérieur du carter du moteur. En fait, cette bague est prise en sandwich entre une mâchoire mobile et une autre mâchoire également montée coulissante et solidaire en rotation sur l'arbre du rotor. Cette seconde mâchoire est, par ailleurs, elle-même, prise en sandwich par ladite bague intermédiaire et une portée de freinage définie sur le couvercle du carter moteur. Finalement, au niveau des zones de contact, l'on trouve des garnitures de freinage. Ainsi, on remarquera que dans le cadre du document EP-A-0.005.212, il n'a pas été résolu le problème du logement des moyens de rappel élastiques repoussant le plateau mobile du frein dans sa position de freinage. Ces moyens de rappel sont logés dans un évidement annulaire ménagé dans le moyeu amagnétique du déviateur de flux. Une telle conception a pour conséquence de fragiliser ce déviateur de flux qui ne peut, dans ces conditions, se présenter sous forme d'un élément indépendant du rotor, mais doit être directement lié à ce dernier comme cela ressort, précisément, de ce document antérieur EP-A-0.005.212, ou encore du document FR-A-2.562.348 cité plus haut.

Sur ce plan, le document FR-A-1.563.930 ne résout pas davantage le problème puisque, non seulement, les moyens de rappel élastiques sont positionnés à l'intérieur du déviateur de flux mais, en outre, celui-ci est sensiblement évidé pour recevoir un embout tronconique associé au plateau mobile du frein.

En outre, si l'on retrouve, effectivement, dans ces deux documents antérieurs, un frein comprenant un plateau mobile se décomposant en une mâchoire fixe et une mâchoire mobile, il n'en reste pas moins que ces dernières se situent, forcément, dans le prolongement axial l'une de l'autre en emprisonnant la partie constituant le plateau fixe du frein.

Ainsi, l'on a cherché à résoudre, dans sa généralité, le problème de l'encombrement du frein.

L'invention, telle qu'elle est caractérisée dans la revendication indépendante, résout le problème et consiste en un moteur frein comprenant, d'une part, un moteur asynchrone muni d'un stator et d'un rotor à cage d'écureuil et, d'autre part, d'un dispositif de freinage fonctionnant par manque de courant et comportant un plateau mobile disposé sur l'arbre du rotor et susceptible, d'une part, d'être désolidarisé d'un plateau fixe sous l'attraction d'un déviateur de flux magnétiquement séparé du rotor et interposé entre ce dernier et ledit plateau mobile, et, d'autre part, de coopérer en freinage avec le même plateau fixe sous l'action de moyens de rappel élastiques lors d'un manque de courant, ledit plateau mobile comportant, en outre, une mâchoire fixe montée solidaire en rotation et en translation sur l'arbre du rotor et une mâchoire mobile montée uniquement fixe en rotation et, donc, libre en translation sur cet arbre, chacune de ces mâchoires fixe et mobile étant susceptible d'agir, simultanément, de part et d'autre d'au moins une bague intermédiaire constituant le plateau fixe du frein qui est monté libre en coulissement sur l'arbre du rotor tout en étant fixe en rotation par rapport au stator, caractérisé par le fait que la mâchoire mobile est constituée d'un noyau cylindrique s'emboîtant à l'intérieur d'un alésage de la mâchoire fixe en 'vue d'y coulisser, chacune desdites mâchoires comportant une collerette périphérique radiale externe ménagée du même côté d'extrémité du plateau fixe et mobile de manière à constituer un dispositif de freinage compact et d'encombrement tel à pouvoir le loger, concentriquement, dans un espace défini, sensiblement pu la circonférence interne d'une partie d'extrémité du stator, dit « chignon électrique», ladite mâchoire mobile définissant, en outre, un logement interne concentrique destiné à l'insertion de l'organe de rappel élastique prenant appui, d'une part, sur le déviateur de flux et, d'autre part, sur un fond dudit logement concentrique.

Les revendications dépendantes 2-8 concernent des modes particuliers de réalisation du moteur frein selon la revendication indépendante.

D'autres caractéristiques de l'invention ressortiront de la description qui va suivre et mettront en évidence la manière de résoudre les autres problèmes cités précédemment et liés aux moteurs freins connus dans l'art antérieur.

Ces caractéristiques devront être considérés isolément ou selon toutes leurs combinaisons techniques possibles.

Cette description donnée à titre d'exemple fera mieux comprendre comment l'invention peut être réalisée, en référence au dessin annexé sur lequel :
. la figure unique est une vue schématique en coupe longitudinale d'un moteur frein selon l'invention.

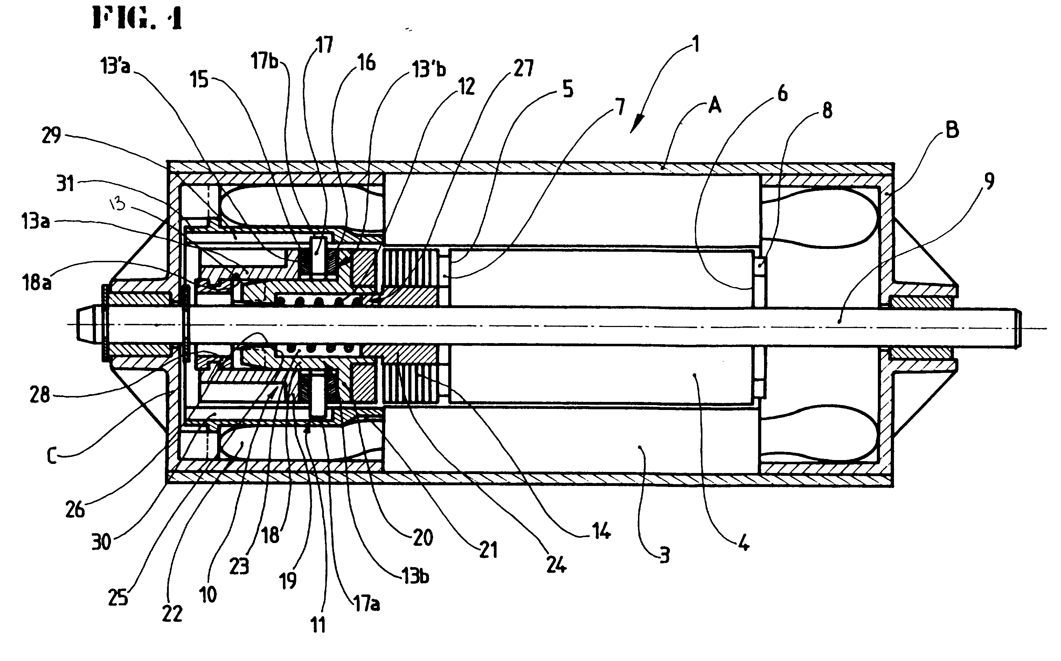

Tel que représenté dans la figure 1, la présente invention concerne un moteur frein 1 comprenant tout particulièrement un moteur asynchrone qui peut être monophasé ou triphasé ou encore monophasé avec condensateur.

En fait, ce moteur asynchrone comporte un stator 3 s'étendant au-dessus d'un rotor 4 à cage d'écureuil. Celui-ci est du type standard et comporte à ses extrémités 5, 6 des bagues de court circuit amagnétiques 7, 8, reliées par des barreaux conducteurs amagnétiques disposés longitudinalement (non visibles sur les dessins) délimitant des secteurs magnétiques en tôle empilée.

Ainsi, lorsque le stator 3 est alimenté, il crée un champ radial coupant les barreaux amagnétiques conducteurs du rotor 4 dans lequel naît un courant induit s'écoulant par l'intermédiaire des bagues de court-circuit 7 et 8. En fait, ce courant induit crée un champ rotorique d'où résulte la force nécessaire à la rotation du rotor 4. Celui-ci transmet cette rotation à l'arbre 9.

Quant au frein 10 désigné globalement qui fonctionne par manque de courant, il comporte au moins un plateau fixe 11 contre lequel s'appuie, sous l'influence de moyens de rappel élastiques 12, un plateau mobile 13.

En fait, le plateau mobile 13 se décompose en une mâchoire fixe 13a montée solidaire en rotation et en translation sur l'arbre 9 du rotor 4 et en une mâchoire mobile 13b montée uniquement fixe en rotation et, donc, libre en translation axiale, sur l'arbre 9. Cette mâchoire mobile 13b est disposée entre la mâchoire fixe 13a et un déviateur de flux 14 magnétiquement séparé du rotor 4 et placé à l'extrémité de ce dernier. De la sorte, par attraction magnétique sous l'action dudit déviateur de flux 14, cette mâchoire mobile 13b vient s'écarter de la mâchoire fixe 13a contre l'action des moyens de rappel élastiques 12. Contrairement, lors d'un manque de courant, et, par conséquent, en l'absence d'attraction magnétique, lesdits moyens de rappel élastiques 12 repoussent cette mâchoire mobile 13b en direction de la mâchoire fixe 13a.

Chacune des mâchoires fixe 13a et mobile 13b constituant le plateau mobile 13 du dispositif de freinage 10 comporte, respectivement sur leurs faces 13'a, 13'b en vis-à-vis, au moins deux garnitures de freinage 15, 16 susceptibles d'agir, simultanément, de part et d'autre du plateau fixe 11 du dispositif de freinage 10. A ce propos, ce plateau fixe 11 se présente sous forme d'au moins une bague intermédiaire 17 montée libre en coulissement sur l'arbre 9 tout en étant immobilisée en rotation par rapport au stator 3 du moteur asynchrone.

Selon l'invention, la mâchoire mobile 13b est constituée d'un noyau cylindrique 18 s'emboîtant à l'intérieur d'un alésage 18A de la mâchoire fixe 13a en vue d'y coulisser, chacune desdites mâchoires 13a, 13b comportant une collerette périphérique radiale 19, 20 externe destinée à recevoir la garniture de freinage correspondante 15, 16 et ménagée du même côté d'extrémité desdites mâchoires 13a, 13b, de manière à constituer un dispositif de freinage compact et d'encombrement tel à pouvoir le loger concentriquement dans un espace 21 défini sensiblement par la circonférence interne d'une partie 22 d'extrémité du stator 3, dit « chignon électrique ».

Par ailleurs, le noyau 18 de la mâchoire mobile 13b définit un logement interne concentrique 23 destiné à l'insertion de l'organe de rappel élastique 12 prenant appui, d'une part, sur un élément support amagnétique 24 du déviateur de flux 14, côté collerette 20, et, d'autre part, sur un fond 25 du logement concentrique 23 de ladite mâchoire mobile 13b, côté opposé à la collerette 20, lequel fond 25 est percé d'un trou 26 de passage de l'arbre 9 du rotor 4.

Selon un mode particulier, l'ensemble formant le plateau mobile 13 du dispositif de freinage 10 est supporté et centré sur l'arbre 9 du rotor 4, d'une part, par un prolongement cylindrique 27 du déviateur de flux 14 s'emboîtant de manière glissante dans le logement concentrique 23 de la mâchoire mobile 13b pour former un palier et, d'autre part, par un autre palier 28 réalisé concentriquement sur la mâchoire fixe 13a à son extrémité opposée à sa collerette 19.

En fait, le maintien, le centrage et le glissement de la mâchoire mobile 13b proprement dite par rapport au rotor 4 s'effectuent, d'une part, par l'une de ses extrémités, côté collerette 20, sur le prolongement cylindrique 27 du déviateur de flux 14 sur lequel est susceptible de coulisser son logement interne 23 et, d'autre part, par son autre extrémité opposée, dans l'alésage 18A de la mâchoire fixe 13a dans lequel elle est susceptible également de coulisser.

Selon le présent exemple de réalisation, la bague intermédiaire 17 définissant le plateau fixe 11 du dispositif de freinage 10 est constituée par une rondelle plate circulaire d'épaisseur choisie munie d'au moins une dent radiale, de préférence deux dents radiales 17a, 17b disposées diamétralement sur sa périphérie et coopérant avec des rainures correspondantes 29, 30, d'un élément fixe 31 en vue d'assurer son immobilisation en rotation par rapport au stator 3.

En fait, l'élément fixe 31 assurant l'immobilisation en rotation de la bague intermédiaire 17 est constituée par une virole rapportée fixement à l'intérieur du chignon 22 du stator 3 et destinée à la réception du dispositif de freinage 10. Il se peut, aussi, que cette virole interne fasse partie d'une coiffe recouvrant le chignon 22 du stator 3.

Classiquement, l'ensemble moteur frein 1 qui vient d'être décrit est renfermé dans un tube A fermé à ses deux extrémités par des bouchons de fermeture B et C formant palier destinés au support de l'arbre 9 du rotor 4.

Les avantages résultant de cette conception consistent, essentiellement, en un gain de place. En effet, pour une puissance équivalente, le moteur correspondant à l'invention est de longueur inférieure. Cela permet également de rapprocher du même coup, les paliers-supports de l'arbre 9 du rotor 4 d'où résulte un meilleur centrage de ce dernier à l'intérieur du stator 3, dans la mesure où l'on s'aperçoit que les supports de paliers B, C, prennent leur référence sur la paroi interne du tube A correspondant au carter du moteur 1.

Avantageusement, les mâchoires fixe 13a et mobile 13b seront obtenues par moulage de matière plastique de caractéristique mécanique appropriée. Quant à la bague intermédiaire 17, celle-ci est réalisée en un matériau destiné à assurer une friction idéale lors du contact avec les garnitures de freinage 15, 16, respectivement des mâchoires fixe 13a et mobile 13b. A noter, à ce propos, que la bague intermédiaire 17 peut, elle aussi, recevoir de part et d'autre, des garnitures de freinage.

Tel que déjà précisé plus haut, le système peut être démultiplié de manière à augmenter, encore, cette surface de freinage. Tout particulièrement, sur le noyau cylindrique 18 de la mâchoire mobile 13b peuvent être montées coulissantes, tout en étant immobilisées en rotation par rapport à cette dernière, une ou plusieurs collerettes auxiliaires équipées, le cas échéant, sur chacune de ses faces de garnitures de freinage, ces collerettes auxiliaires venant s'interposer, à chaque fois, entre deux bagues intermédiaires de conception analogue et la bague intermédiaire 17 illustrée dans la figure 1. A noter, là encore, que l'on peut, indifféremment, équiper cette ou ces bagues intermédiaires 17 et/ou les collerettes 19, 20 et/ou les collerettes auxiliaires (non représentées) des garnitures de freinage.

Il apparaît évident, au vu des nombreux avantages qu'apporte la présente invention par rapport à l'état de la technique, notamment un réduction de la taille du moteur frein et un freinage d'un rendement supérieur, que cette invention représente un net progrès dans le domaine technique considéré.

## Revendications

1. Moteur frein (1) comprenant, d'une part, un moteur asynchrone muni d'un stator (3) et d'un rotor à cage d'écureuil (4) et, d'autre part, d'un dispositif de freinage (10) fonctionnant par manque de courant et comportant un plateau mobile (13) disposé sur l'arbre (9) du rotor (4) et susceptible, d'une part, d'être désolidarisé d'un plateau fixe (11) sous l'attraction d'un déviateur de flux (14) magnétiquement séparé du rotor (4) et interposé entre ce dernier (4) et ledit plateau mobile (13), et, d'autre part, de coopérer en freinage avec le même plateau fixe (11) sous l'action de moyens de rappel élastiques (12) lors d'un manque de courant, ledit plateau mobile (13) comportant, en outre, une mâchoire fixe (13a) montée solidaire en rotation et en translation sur l'arbre (9) et une mâchoire mobile (13b) montée uniquement fixe en rotation et, donc, libre en translation sur cet arbre (9), chacune de ces mâchoires fixe (13a) et mobile (13b) étant susceptible d'agir, simultanément, de part et d'autre d'au moins une bague intermédiaire (17) constituant le plateau fixe (11) du frein qui est monté libre en coulissement sur l'arbre (9) tout en étant fixe en rotation par rapport au stator (3), caractérisé par le fait que la mâchoire mobile (13b) est constituée d'un noyau cylindrique (18) s'emboîtant à l'intérieur d'un alésage (18a) de la mâchoire fixe (13a) en vue d'y coulisser, chacune desdites mâchoires (13a, 13b) comportant une collerette périphérique radiale (19, 20) externe ménagée du même côté d'extrémité du plateau fixe (11) et mobile (13) de manière à constituer un dispositif de freinage compact et d'encombrement tel à pouvoir le loger, concentriquement, dans un espace (21) défini, sensiblement par la circonférence interne d'une partie (22) d'extrémité du stator, dit « chignon électrique », ladite mâchoire mobile (13b) définissant, en outre, un logement interne concentrique (23) destiné à l'insertion de l'organe de rappel élastique (12) prenant appui, d'une part, sur le déviateur de flux (14) et, d'autre part, sur un fond (25) dudit logement concentrique (23).

2. Moteur selon la revendication 1, caractérisé par le fait que les collerettes périphériques radiales (19, 20) correspondant aux mâchoires fixe (13a) et mobile (13b) du plateau mobile (13) comportent, chacune et sur leur face (13'a, 13'b) en vis-à-vis, une garniture de freinage (15, 16).

3. Moteur selon la revendication 1, caractérisé en ce que l'ensemble formant le plateau mobile (13) est supporté et centré sur l'arbre (9) du rotor (4), d'une part, par un prolongement cylindrique (27) du déviateur de flux (14) s'emboîtant de manière glissante dans le logement concentrique (23) du plateau mobile (13) pour former un palier et, d'autre part, par un autre palier (28) réalisé concentriquement sur la mâchoire fixe (13a) à son extrémité opposée à sa collerette (19).

4. Moteur selon la revendication 3, caractérisé en ce que le maintien, le centrage et le glissement de la mâchoire mobile (13b) proprement dite par rapport au rotor (4) s'effectuent, d'une part, par l'une de ses extrémités, côté collerette (20) sur le prolongement cylindrique (27) du déviateur de flux (14) sur lequel est susceptible de coulisser son logement interne (23) et, d'autre part, par son autre extrémité opposée, dans l'alésage (18a) de la mâchoire fixe (13a) dans lequel elle est susceptible également de coulisser.

5. Moteur selon l'une des revendications 1 à 4, caractérisé en ce que la ou les bagues intermédiaires (17) sont constituées par une rondelle plate circulaire d'épaisseur choisie munie d'au moins une dent, de préférence deux dents radiales (17a, 17b) disposées diamétralement sur sa périphérie et coopérant avec des rainures correspondantes (29, 30) d'un élément fixe (31) en vue d'assurer son immobilisation en rotation.

6. Moteur selon l'une quelconque des revendications 1 à 5, caractérisé par le fait qu'entre deux bagues intermédiaires (17) successives est emprisonnée une collerette auxiliaire munie, selon le cas, de garnitures de freinage et montée coulissante sur le noyau (18) de la mâchoire mobile (13b) tout en étant solidaire en rotation de cette dernière.

7. Moteur selon la revendication 5, caractérisé en ce que l'élément fixe (31) assurant l'immobilisation en rotation de la bague intermédiaire (17) est constitué par une virole rapportée fixement à l'intérieur du chignon (22) du stator (3) destiné à la réception du dispositif de freinage (10).

8. Moteur selon la revendication 7, caractérisé par le fait que la virole fait partie intégrante d'une coiffe venant recouvrir le chignon (22) du stator (3).

## Patentansprüche

1. Bremsmotor (1) umfassend, einerseits, einen mit einem Stator (3) und einem Käfigrotor (4) versehenen Asynchronmotor und, andererseits, eine bei Strommangel arbeitende Bremsvorrichtung (10), die eine auf der Welle (9) des Rotors (4) angeordnete, bewegliche Spannplatte (13) umfaßt, die geeignet ist, einerseits, unter der Anziehung eines magnetisch vom Rotor (4) getrennten und zwischen diesem letzten (4) und der genannten, beweglichen Spannplatte (13) zwischengefügten Strömungsablenkers von einer festen Spannplatte (11) gelöst zu werden, und, andererseits, unter der Wirkung von elastischen Rückstellmitteln (12) bei Strommangel mit derselben festen Spannplatte (11) in Bremsung zusammenzuwirken, wobei die genannte, bewegliche Spannplatte (13) außerdem eine dreh- und translationsfest auf der Welle (9) gelagerte, feste Backe (13a) und eine nur drehfest und also translationsbeweglich auf dieser Welle (9) gelagerte, bewegliche Backe (13b) umfaßt, wobei jede dieser festen (13a) und beweglichen (13b) Backen in der Lage ist, gleichzeitig beiderseits wenigstens eines, die feste Spannplatte (11) der Bremse bildenden Zwischenringes (17) einzu-greifen, der freigleitend auf der Welle (9) gelagert, während er drehfest mit dem Stator (3) verbunden ist, dadurch gekennzeichnet, daß die bewegliche Backe (13b) aus einem zylindrischen Kern (18) besteht, der sich in einer Bohrung (18a) der festen Backe (13a) einfügt, um dort zu gleiten, wobei jede der genannten Backen (13a, 13b) einen äußeren, radialen Umkreiskragen (19, 20) umfaßt, der so an derselben Endseite der festen (11) und der beweglichen (13) Spannplatte vorgesehen ist, daß eine kompakte Bremsvorrich-tung eines derartigen Außmasses gebildet wird, daß sie konzentrisch in einen « elektrische Feldwindungen » genannten, im wesentlichen vom Innenumkreis eines Endteils (22) des Stators gebildeten Raum (21) untergebracht werden kann, wobei die bewegliche Backe (13b) außerdem einen konzentrischen Innenraum (23) für die Einführung des elastischen Rückstellorgans (12) definiert, das sich, einerseits, auf den Strömungsablenker (14) und, andererseits, auf einen Boden (25) des genannten konzentrischen Raums (23) abstützt.

2. Motor nach Anspruch 1, dadurch gekennzeichnet, daß die der festen (13a) und beweglichen (13b) Backen der beweglichen Spannplatte (13) entsprechenden, radialen Umkreisflansche (19, 20) an ihren einander zugewandten Flächen (13'a, 13'b) jeweils einen Bremsbelag (15, 16) umfassen.

3. Motor nach Anspruch 1, dadurch gekennzeichnet, daß das die bewegliche Spannplatte (13) bildende Ganze, einerseits, von einer zylindrischen Verlängerung (27) des Stromablenkers (14), die sich gleitend in den konzentrischen Raum (23) der beweglichen Spannplatte (13) einfügt, um ein Lagerblock zu bilden, und, andererseits, von einem weiteren, konzentrisch an der festen Backen (13a), an seinem, seinem Kragen (19) gegenüberliegenden Ende vorgesehenen Lagerblock (28) auf der Welle (9) des Rotors (4) getragen und zentriert wird.

4. Motor nach Anspruch 3, dadurch gekennzeichnet, daß das Halten, das Zentrieren und das Gleiten der eigentlichen beweglichen Backe (13b) bezüglich des Rotors (4), einerseits, an ihrem einen, kragenseitigen (20) Ende auf der zylindrischen Verlängerung (27) des Strömungsablenkers (14), auf der ihr Innenraum (23) gleiten kann, und, andererseits, an ihrem anderen, gegenüberliegenden Ende in der Bohrung (18a) der festen Backe (13a), in der sie ebenfalls gleiten kann, erfolgen.

5. Motor nach einem der Ansprüche 1 bis 4, dadurch gekennzeichnet, daß der bzw. die Zwischenringe (17) aus einer kreisförmigen, flachen Scheibe einer gewählten Dicke bestehen, die an ihrem Umkreis mit wenigstens einem, vorzugsweise zwei diametral gegenüberliegend angeordneten Radialzähnen (17a, 17b) versehen sind, die mit entsprechenden Nuten (29, 30) eines festen Glieds (31) zusammenwirken, um deren Drehfestigkeit zu sichern.

6. Motor nach einem der Ansprüche 1 bis 5, dadurch gekennzeichnet, daß zwischen zwei aufeinanderfolgenden Zwischenringen (17) ein je nach dem Fall mit Bremsbelägen versehener Hilfskragen eingeschlossen ist, der gleitend auf dem Kern (18) der beweglichen Spannplatte (13b) gelagert, während er drehfest mit dieser letzten verbunden ist.

7. Motor nach Anspruch 5, dadurch gekennzeichnet, daß das die Drehfestigkeit des Zwischenringes (17) sichernde, feste Glied (31) aus einer fest gegen der Innenseite der zum Aufnehmen der Bremsvorrichtung (10) bestimmten Feldwindungen (22) des Stators (3) angebrachten Zwinge besteht.

8. Motor nach Anspruch 7, dadurch gekennzeichnet, daß die Zwinge ein wesentlicher Teil einer die Feldwindungen (22) des Stators (3) abdeckenden Kappe ist.

## Claims

1. Braking motor (1) comprising, on the one hand, an asynchronous motor provided with a stator (3) and a squirrel-cage stator (4) and, on the other hand, a braking device (10) operating at current failure and including a mobile chuck plate (13) arranged on the shaft (9) of the rotor (4) and capable, on the one hand, of being released from a fixed chuck plate (11) under the attraction of a flow deflector magnetically separated from the rotor (4) and interposed between the latter (4) and said mobile chuck plate (13) and, on the other hand, of co-operating, in braking, with the same fixed chuck plate (11) under the action of springy restoring means (12) when current fails, said mobile chuck plate (13) including, in addition, a fixed jaw (13a) fitted, integral in rotation and in translation, on the shaft (9) and a mobile jaw (13b) fitted, only fixed in rotation and, hence, freely translating, on that shaft (9), each of these fixed (13a) and mobile (13b) jaws being capable of simultaneously acting on both sides of at least one intermediate ring (17) forming the fixed chuck plate (11) of the brake, which is freely slidingly fitted on the shaft (9) whilst being fixed in rotation with respect to the stator (3), characterised in that the mobile jaw (13b) is formed of a cylindrical core (18) fitting inside a bore (18a) of the fixed jaw (13a) in order to slide in it, each of said jaws (13a, 13b) including an external radial peripheral flange (19, 20) provided for on the same end side of the fixed (11) and mobile (13) chuck plate, so as to form a compact braking device of such a size that it can be concentrically accommodated in a space (21) substantially defined by the inner circumference of an end portion (22) of the stator, called « electric field windings », said mobile jaw (13b) defining, in addition, a concentric internal recess (23) for the insertion of the springy restoring organ (12) resting, on the one hand, on the flow deflector (14) and, on the other hand, on a bottom (25) of said concentrical recess (23).

2. Motor according to claim 1, characterized in that the radial peripheral flanges (19, 20) corresponding to the fixed (13a) and mobile (13b) jaws of the mobile chuck plate (13) each include, on their face (13'a, 13'b) facing each other, a brake lining (15, 16).

3. Motor according to claim 1, characterized in that the aggregate forming the mobile chuck plate (13) is supported and centered on the shaft (9) of the rotor (4), on the one hand, by a cylindrical extension (27) of the flow deflector (14) slidingly fitting in the concentric recess (23) of the mobile chuck plate (13) to form a bearing block and, on the other hand, by another bearing block (28) concentrically provided for on the fixed jaw (13a), at its end opposite its flange (19).

4. Motor according to claim 3, characterized in that the maintaining, the centering and the sliding of the mobile jaw (13b) itself with respect to the rotor (4) occur, on the one hand, at its one end, on the side of the flange (20) on the cylindrical extension (27) of the flow deflector (14) on which is capable of sliding its internal recess (23) and, on the other hand, at its other, opposite end, in the bore (18a) of the fixed jaw (13a) in which it is also capable of sliding..

5. Motor according to any of claims 1 through 4, characterized in that the intermediate ring or rings (17) are formed by a circular flat washer of a chosen thickness provided with at least one radial tooth, preferably two radial teeth (17a, 17b) arranged diametrically opposite each other at its periphery and co-operating with corresponding grooves (29, 30) of a fixed member (31) in order to ensure its immobilisation in rotation.

6. Motor according to any of claims 1 through 5, characterized in that between two successive intermediate rings (17) is confined an ancillary flange provided, as the case may be, with brake linings and slidingly fitted on the core (18) of the mobile chuck plate (13b) whilst being integral in rotation with the latter.

7. Motor according to claim 5, characterized in that the fixed member (31) ensuring the immobilisation in rotation of the intermediate ring (17) is formed of a sleeve securely applied against the inside of the field windings (22) of the stator (3) for receiving the braking device (10).

8. Motor according to claim 7, characterized in that the sleeve is an integral part of a cap covering the field windings (22) of the stator (3).
